# EUROPÄISCHE PATENTANMELDUNG

(11) **EP 2 573 441 A1**
(43) Veröffentlichungstag der Anmeldung: **27.03.2013**
(21) Anmeldenummer: 11182295.3
(22) Anmeldetag: 22.09.2011
(51) Int. Cl.: F16L 47/32

(54) **T-Fitting**

(71) Anmelder: Georg Fischer Rohrleitungssysteme AG, 8201 Schaffhausen (CH)
(72) Erfinder: Wermelinger, Jörg, 8200 Schaffhausen (CH)
(74) Vertreter: De Colle, Piergiacomo

(57) **Zusammenfassung**

Verfahren zur Herstellung eines geschweissten T-Fittings aus thermoplastischem Kunststoffe, wobei die zusammenzufügenden Rohre entlang ihrer annähernden Durchdringungskurve verschweisst werden.

## Beschreibung

Die Erfindung betrifft ein geschweisstes T-Fitting aus thermoplastischem Kunststoff sowie ein Verfahren zu dessen Herstellung.

T-Fittings werden in Rohrleitung zur Erzeugung von Rohrabgängen bzw. Abzweigungen eingesetzt. Aus Gewichts- und Korrosionsgründen wird im Rohrleitungsbau vermehrt thermoplastischer Kunststoff verwendet. Vorzugsweise werden Fluide wie bspw. Gas, Wasser, Abwasser oder auch Chemikalien in solchen Leitungen transportiert.

Aus dem Stand der Technik sind unterschiedliche Verfahren zur Herstellung von T-Fittings aus Kunststoff bekannt.
In der Regel werden T-Fittings durch das Spritzgiessverfahren hergestellt. Dieses eignet sich vor allem für Rohrleitungen bzw. T-Fittings die eine bestimmte Dimension nicht überschreiten. Da einerseits die Wirtschaftlichkeit dieses Verfahrens erst ab einer gewissen Stückzahl der herzustellenden Fittings gegeben ist was bei grösseren Dimensionen selten der Fall ist und andererseits stösst man auch ab einer gewissen Wandstärkendimension rheologisch an die Grenzen der Machbarkeit. Das Spritzgiessverfahren eignet sich für grosse Dimensionen nur bedingt.

Die US 5'551'733 offenbart ein T-Fitting, welches durch das Spritzgiessverfahren hergestellt wurde. Zur Verstärkung des Fittings wurden entlang der Mantelfläche kreuzartige Streben angebracht, die direkt in die Gussform mit eingearbeitet wurden. Dadurch erhält das T-Fitting eine höhere Steifigkeit und ermöglicht eine höhere Druckbelastbarkeit.

Ein weiteres Verfahren zur Herstellung eines Kunststoff-T-Fittings besteht darin, 45° schräg abgeschnittene Rohre miteinander zu verschweissen. Dazu werden zwei Schweissungen benötigt, was wiederum für die Druckbeständigkeit des T-Fittings von grossem Nachteil ist und dadurch mit einem Abminderungsfaktor der Druckbelastbarkeit von 0.6 gerechnet werden muss. Um diesen Abminderungsfaktor zu kompensieren besteht die Möglichkeit eine zusätzliche Verstärkung anzubringen, was wiederum mit hohen Kosten und grossem Aufwand verbunden ist.

Aus dem Stand der Technik ist zur Herstellung eines geschweissten T-Fittings ein Verfahren bekannt, welches durch das Abdrehen einer Hohlstange an den beiden äusseren Enden die fluchtenden Stutzen bildet. In der Mitte der Hohlstange wird die Aussenkontur an einer Stelle entsprechend überfrässt um dort eine planare Auflagefläche zur Anschweissung des abgehenden Stutzens zu erzeugen. Die EP 1 431 649 B1 offenbart ein solches Verfahren, wobei das dargestellte Verfahren durch einen zusätzlich montierten Verstärkungsring die Druckfestigkeit des T-Fittings erhöht.
Ein solches Verfahren bringt den Nachteil des hohen Materialverbrauchs durch die Überarbeitung der Hohlstange mit sich, sowie den zusätzlichen Aufwand des nachträglichen Anbringens einer Verstärkung.

Aufgabe der vorliegenden Erfindung ist es einer Vorrichtung und ein Verfahren vorzuschlagen, welches die Druckfestigkeit eines geschweissten T-Fittings erhöht ohne bei der Herstellung des Fittings viel Materialverlust zu generieren und ohne die Notwendigkeit zusätzlicher Verstärkungen.

Diese Aufgabe wird erfindungsgemäss dadurch gelöst, dass die zusammenzufügenden Rohre entlang ihrer annähernden Durchdringungskurve verschweisst werden.

Dadurch, dass die zusammenzufügenden Rohre entlang ihrer Durchdringungskurve verschweisst werden, verbessert sich die Druckbelastbarkeit. Die nach dem Stand der Technik geschweissten T-Fittings weisen einen Abminderungsfaktor der Druckbelastbarkeit von 0.6 auf. Durch das erfindungsgemässe Verfahren wird die Druckbelastbarkeit ohne Anbringen zusätzlichen Verstärkungen deutlich verbessert. Bei genauer Analyse hat sich gezeigt, dass es möglich ist die Rohre mit einer der Durchdringungskurve annähernden Kontur zu verschweissen und dass dadurch die Druckbelastbarkeit gegenüber einer Schweissnaht, die genau der Durchdringungskurve folgt nicht abnimmt.
Die annähernde Durchdringungskurve verläuft bei unterschiedlichen Rohrdurchmessern entlang der zusammenzuschweissenden Rohre vorzugsweise der Kontur des Radius der Hauptleitung und bei gleichen Rohrdurchmessenen der zusammenzuschweissenden Rohre der Durchdringungskurve, welche im Scheitelpunkt durch einen Radius verrundeten ist.

Der Verlauf dieser annähernden Durchdringungskurve entspricht der Kontur des Radius der Hauptleitung, das heisst, der Leitung bzw. des Rohrstücks an die das abgehende Rohr angeschweisst wird, wobei ausschliesslich bei Verschweissungen bei denen die miteinander zu verschweissenden Rohre unterschiedliche Durchmesser aufweisen. Im Falle, dass Rohre miteinander verschweisst werden, die denselben Durchmesser aufweisen, wird entlang der Durchdringungskurve geschweisst, wobei die Kurve nicht bis in den Scheitelpunkt verläuft sondern durch einen Radius verrundet ist, da spitz zusammenlaufende Konturen sich für druckbelastete Bauteile nicht eignen. Vorzugsweise wird zur Verrundung ein Radius verwendet der einem Fünftel des Radius der zusammenzuschweissenden Rohre entspricht.

Damit die Rohre entlang ihrer annähernden Durchdringungskurve verschweisst werden können, wird an der Stelle ihrer Kontaktflächen, das heisst beim abzweigenden Rohr stirnseitig und bei der Hauptleitung in einer entsprechenden Aussparung eine Kontur angebracht, sei es durch fräsen oder sonst eine Bearbeitung, die der annähernden Durchdringungskurve entspricht.

Um die Kontaktflächen auf die gewünschte Temperatur zu bringen, um anschliessend die Kunststoffrohre miteinander zu verschweissen, werden die Kontaktflächen an einem Heizspiegel erwärmt. Als Variante zum Heizspiegel ist es auch möglich eine flexible Heizmatte zu verwenden, die sich ideal der Kontur der annähernden Durchdringungskurve anschmiegt und dadurch das Erwärmen der Kontaktflächen gewährleistet. Bis zur Erreichung der gewünschten Temperatur bzw. Elastizität werden die Kontaktflächen in Berührung mit dem Heizspiegel bzw. der Heizmatte gehalten. Der Heizspiegel wie auch die Heizmatte muss zur optimalen Wärmeübertragung an der kompletten Kontaktfläche der Rohre anliegen. Die Erwärmung der beiden miteinander zu verschweissenden Rohre läuft vorzugsweise gleichzeitig ab. Zudem ist der Heizspiegel vorzugsweise so ausgestaltet, dass auf der einen Seite des Heizspiegels eine passende Kontur zur optimalen Berührung der Kontaktfläche des abzweigenden Rohres vorliegt und die gegenüberliegende Seite des Heizspiegels so ausgebildet ist, dass der Heizspiegel optimal an der Kontaktfläche der Aussparung der Hauptleitung anliegt.
Dadurch wird ermöglicht, dass die Kontaktflächen gleichzeitig mit nur einem Heizspiegel bzw. Heizmatte erwärmt werden. Dennoch ist auch eine Erwärmung der miteinander zu verschweissenden Kontaktflächen mit zwei separaten Heizspiegeln bzw. Heizmatten denkbar. Damit eine optimale Wärmeübertragung gewährleistet ist, muss der Heizspiegel die Kontur der annähernden Durchdringung der zu verschweissenden Rohre aufweisen, um entlang der gesamten Fläche der Kontur der annähernden Durchdringungskurve anzuliegen.

Ein solches Verfahren wir in der Regel erst bei Hauptrohrleitungsdurchmessern angewendet die mindestens 400 mm aufweisen, unabhängig von den Durchmessern der Abzweigungsanschlüssen.

Vorzugsweise sind dir zu verschweissenden Rohre aus demselben Kunststoff, speziell gut eignet sich PE, PP, PB PA oder PVDF.

Eine Ausgestaltung der Erfindung besteht darin, dass über die zusammenzuschweissenden Rohre als Verstärkung ein weiteres Rohr geschoben wird, an welches ebenfalls die Kontur der annähernden Durchdringungskurve gefräst wird, sowohl bei der Ausnehmung der Hauptleitung als auch an der Stirnseite des abzweigenden Rohres. Als weiteren Schritt werden die verstärkten Rohre an den Kontaktflächen mittels des Heizspiegels oder der Heizmatte erwärmt.
Die Verstärkung dient ebenso als Wandstärkenausgleich, das heisst, wenn die zu verschweissenden Rohre zu grosse Unterschiede bezüglich ihrer Wandstärke aufweisen, besteht die Möglichkeit, die Rohre die als Verstärkung eingesetzt werden entsprechend ihrer Wandstärke auszuwählen, um mehr oder weniger dieselben Wandstärken der verstärkten Rohre beim Verschweissen vorliegen zu haben.

Ausführungsbeispiele der Erfindung werden anhand der Figuren beschrieben, wobei sich die Erfindung nicht nur auf die Ausführungsbeispiele beschränkt. Es zeigen:
- Fig. 1: einen Längsschnitt sowie eine Schnittansicht entsprechend der Schnittlinien eines geschweissten T-Fittings mit unterschiedlichen Rohrdurchmessern der zu verschweissenden Rohre,
- Fig. 2: einen Längsschnitt sowie eine Schnittansicht entsprechend der Schnittlinien eines geschweissten T-Fittings mit gleichen Rohrdurchmesser der zu verschweissenden Rohre,
- Fig. 3: einen Längsschnitt sowie eine Schnittansicht entsprechend der Schnittlinien eines geschweissten T-Fittings mit einer Verstärkung,
- Fig. 4: einen Längsschnitt sowie eine Schnittansicht entsprechend der Schnittlinien eines geschweissten T-Fittings mit unterschiedlichen Rohrdurchmessern der zu verschweissenden Rohre, wobei das abzweigende Rohr nicht lotrecht von der Hauptleitung abzweigt und
- Fig. 5: die einzelnen Produktionsschritte des Herstellverfahrens wobei die einzelnen Komponenten im Längsschnitt dargestellt sind.

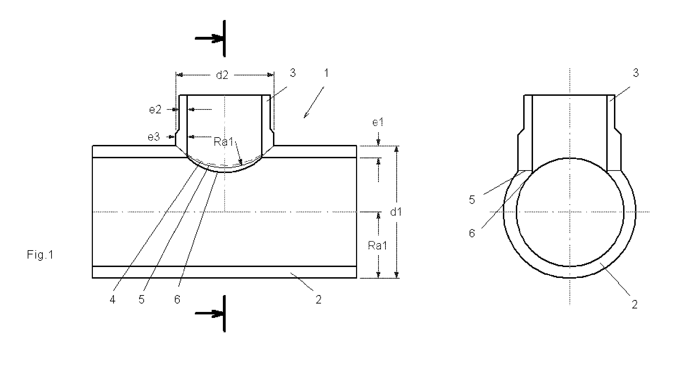

Fig. 1 zeigt ein verschweisstes T-Fitting 1 bei welchem die abzweigende Rohrleitung 3 unter einem 90° Winkel zur Hauptleitung 2 verläuft bzw. lotrecht mit der Hauptleitung 2 zusammengefügt ist. Der Durchmesser d2 der Abzweigung 3 entspricht nicht dem Durchmesser d1 der Hauptleitung 2. Es werden demzufolge Rohre 2, 3 in Fig.1 miteinander verschweisst, die unterschiedliche Durchmesser d1, d2 aufweisen. Zur Bildung einer guten Schweissnaht ist es von Vorteil, dass die Wandstärken e1, e3 im Bereich der Schweissnaht etwa gleich dick sind, wodurch gleiche Fügedruckverhältnisse entstehen. Zudem ist durch die verbreitete Wandstärke eine erhöhte Festigkeit gegeben. Deshalb ist es Vorteilhaft die Wandstärken der zusammenzufügenden Rohre anzugleichen bzw. anzupassen in dem bspw. eine Zunahme der Wandstärke e3 in der Abzweigung 3 vorgesehen ist, wie in Fig. 1 dargestellt. Die theoretische Durchdringungskurve 4, die sich beim zusammenfügen der beiden Rohrleitungen 2, 3 ergeben würden, ist in Fig. 1 durch die gestrichelte Linie 4 erkennbar. Die annähernde Durchdringungskurve 5 wird durch die Kontur des Radius Ra1 der dem Radius Ra1 der Hauptrohrleitung 2 entspricht erzielt. Das bringt den Vorteil mit sich, dass die annähernde Durchdringungskurve 5 einfach herzustellen ist und dieselbe Druckbelastbarkeit aufweist, wie wenn das Fitting 1 genau der Durchdringungskurve 4 entlang geschweisst werden würde. Die innere Durchdringungskurve 6 entsteht durch die Herstellung der annähernden Durchdringungskurve 5 und ergibt sich somit automatisch. Wie schon zuvor erwähnt wird durch das Verscheissen des T-Fittings 1 entlang der annähernden Durchdringungskurve 5 eine höhere Druckbelastbarkeit erreicht. Aus dem Stand der Technik waren bisher nur geschweisste T-Fittings bekannt, die nur einer Druckbelastbarkeit stand halten, die 0.6-mal der Druckbelastbarkeit auf die entsprechende Rohrdimension entspricht, da sie nicht einer annähernden Durchdringungskurve geschweisst werden sondern entlang gerade verlaufenden Kanten. Um eine höhere Druckbelastbarkeit zu erzielen mussten entsprechende Verstärkungen angebracht werden. Beim erfindungsgemässen Verfahren zur Herstellung eins T-Fittings ist eine höhere Druckbelastbarkeit gegeben da entlang der annährenden Durchdringungskurve 5 geschweisst wird. Zudem besteht ein weiterer Vorteil darin dass die annähernde Durchdringungskurve 5 durch eine einfache Teilkreiskontur herzustellen ist und trotzdem die hohe Druckbelastbarkeit erreicht.

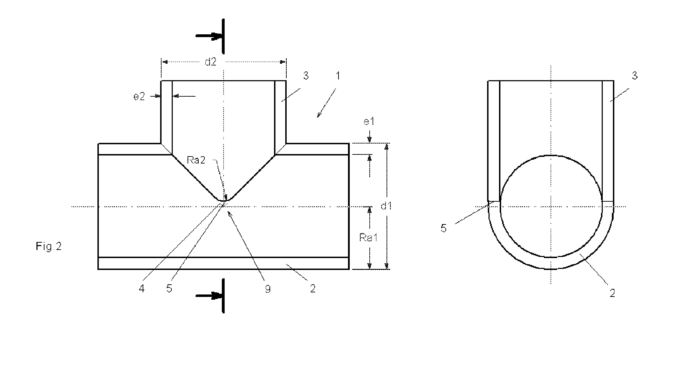

In Fig. 2 wird ein Längschnitt eines T-Fittings 1 dargestellt bei dem die miteinander zu verschweissenden Rohre 2, 3 denselben Durchmesser d1, d2 aufweisen, weshalb die Durchdringungskurve 4, zwei im Scheitelpunkt 9 zusammenlaufenden Geraden entspricht. Da spitz zusammenlaufende Geraden bzw. Schweiss-Konturen nicht ideal sind um eine hohe Druckbelastbarkeit zu erzielen, wird der Scheitelpunkt 9 durch einen Radius Ra2 verrundet. Der Radius Ra2 entspricht einem Zehntel der gleich dimensionierten Rohrdurchmesser d1, d2 bzw. einen Fünftel des Radius Ra1. Die Schweissung entlang der annähernden Durchdringungskurve 5 gewährleistet auch bei dieser Ausführungsform des T-Fittings 1 mit denselben Rohrdurchmesser d1, d2 einen bessere Druckbelastbarkeit als es aus dem Stand der Technik bekannt ist.

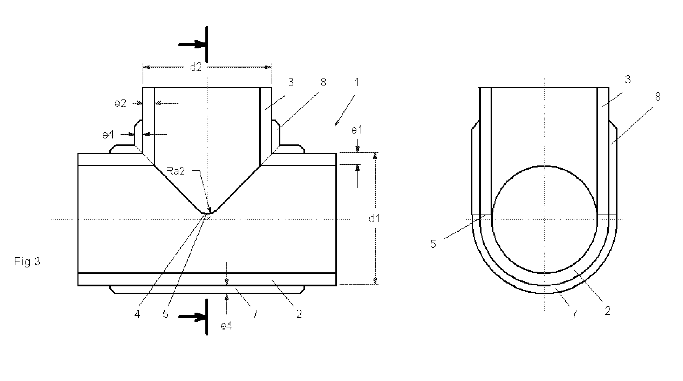

Fig. 3 stellt ein verstärktes T-Fitting 1 dar, wobei die Rohre 7, 8 zuvor über die zu verschweissenden Rohre 2, 3 geschoben werden und anschliessend die Konturen der annährenden Durchdringungskurve 5 an den Rohren 2, 3 sowie gleichzeitig im selben Arbeitsgang an den übergestülpten Verstärkungsrohren 7, 8 gefräst werden.
Durch die Verstärkungen wird eine zusätzliche Erhöhung der Druckbelastbarkeit erzielt.

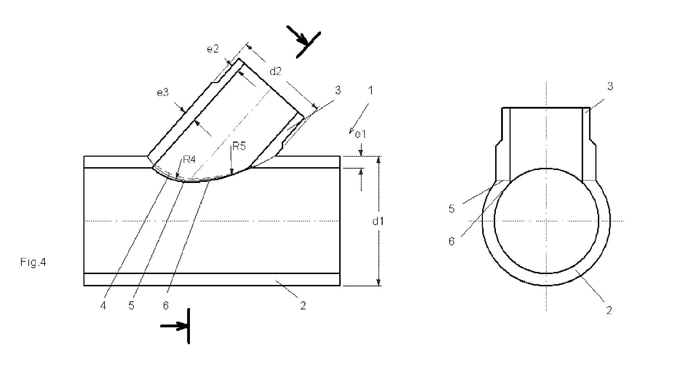

Fig. 4 zeigt ein T-Fitting 1 bei dem die zu verschweissenden Rohre 2, 3 nicht unter einem 90° Winkel zusammengefügt werden. Auch bei solchen T-Fittings, bei denen die Rohre unter beliebigen Winkeln zusammengefügt werden, wird entlang der annähernden Durchdringungskurve 5 geschweisst und die Rohre entsprechend präpariert bzw. die entsprechende Kontur angebracht. Wodurch die Abzweigung 3 bzw. die Stirnfläche der Abzweigung 3 wie auch die Aussparung der Hauptleitung 2 die entsprechende Kontur der annährende Durchdringungskurve 5 aufweisen um sie anschiessend zusammenzufügen. Wobei die annähernde Durchdringungskurve 5, bei Rohren die nicht unter 90° zusammengeschweisst werden, sich die Kontur nicht durch nur einen Radius definieren lässt, sondern mindestens zwei Radien Ra4, Ra5 notwendig sind um eine annähernde Durchdringungskurve 5 festzulegen, entlang der die Rohre 2,3 verschweisst werden. Die theoretisch ermittelte Durchdringungskurve gibt den ungefähren Verlauf der annähernden Durchdringungskurve vor. Durch definierte Radien, wie Ra4 und Ra5, die an die theoretische Durchdringungskurve gelegt werden, entsteht die annähernde Durchdringungskurve. Ideal ist es dafür möglichst wenig aneinandergereihte Radien zu benötigen, jedoch ist es wichtig, dass die annähernde Durchdringungskurve nahe an der theoretischen Durchdringungskurve liegt.

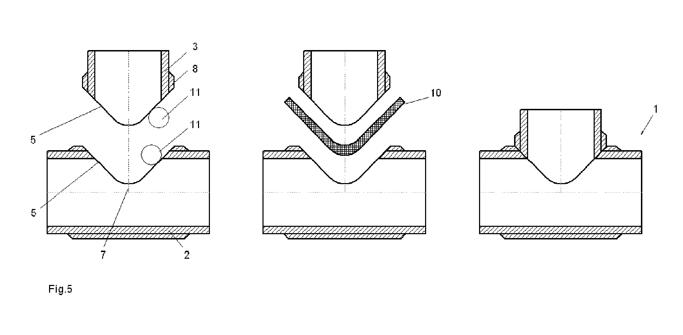

In Fig. 5 werden die einzelnen Schritte des Herstellverfahrens eines geschweissten T-Fittings 1 aufgezeigt. Die erste Abbildung verdeutlicht das Anbringen, vorzugsweise durch Fräsen, der annähernden Durchdringungskurve 5 an die Stirnseite der Abzweigung 3 sowie die Fertigung der Aussparung in der Hauptleitung 2 der Kontur der annähernden Durchdringungskurve 5. Wobei die in Fig. 5 abgebildeten Rohre 2, 3 durch die darüber geschobenen Rohre 7, 8 eine Verstärkung aufweisen. Das Fräsen der Rohre 2, 3, 7,8 muss selbstverständlich nicht wie in Fig. 5 dargestellt parallel verlaufen, die Abzweigung 3 sowie die Hauptleitung 2 können auch separat bearbeitet werden und werden erst beim Schweissprozess bzw. Erwärmen parallel behandelt. Anschliessen, dargestellt durch die zweite Abbildung, erfolgt das Erwärmen der Kontur der annähernden Durchdringungskurve 5, mittels eines Heizspiegels 10 der ebenfalls die Form bzw. Kontur der annähernden Durchdringungskurve 5 aufweist. Wobei die eine Seite des Heizspiegels 10 vorzugsweise derart ausgebildet ist, dass die annährende Durchdringungskurve 5 der Stirnseite der Abzweigung 3 optimal daran anliegen kann, um eine optimale Wärmeübertragung zu ermöglichen. Das heisst, dass möglichst keine Freiräume bzw. Hohlräume zwischen Heizspiegel 10 und der Kontaktfläche des zu verschweissenden Rohres 2, 3, 7, 8 entstehen. Zudem ist es von Vorteil, wenn die andere Seite des Heizspiegels 10 die Form der Kontur der Aussparung der Hauptleitung 2 aufweist, um auch dort eine gute Wärmeübertragung durch vollständiges Anliegen des Heizspiegels 10 zu erzielen. Ebenso wird durch einen Heizspiegel 10 der beide Konturen aufweist ermöglicht, dass die Erwärmung beider Rohre gleichzeitig mit nur einem Heizspiegel 10 durchgeführt werden kann. Ideal dafür ist auch der Einsatz einer biegbaren Heizmatte. Nach der Erwärmungsphase wird der Heizspiegel entfernt und die beiden Rohr 2, 3 inkl. Verstärkung 7, 8 zusammengepresst, wodurch die Schweissnaht entlang der annähernden Durchdringungskurve 5 entsteht.

### Bezugszeichenliste

- 1: T-Fitting
- 2: Hauptleitung
- 3: Abzweigung
- 4: Durchdringungskurve
- 5: Annähernde Durchdringungskurve
- 6: Innere annähernde Durchdringungskurve
- 7: Verstärkung
- 8: Verstärkung
- 9: Scheitelpunkt
- 10: Heizspiegel
- 11: Fräser

- d1: Durchmesser Hauptrohrleitung
- d2: Durchmesser Abzweigung
- e1: Wandstärke Hauptleitung
- e2: Wandstärke Abzweigung
- e3: verbreiterte Wandstärke Abzweigung

- Ra1: Radius der annähernden Durchdringungskurve bei T-Fitting mit ungleichen Rohrdurchmessern sowie Radius der Hauptleitung
- Ra2: Verrundungsradius der annähernden Durchdringungskurve bei T-Fitting mit gleichen Rohrdurchmessern
- Ra3: einer der Radien der annähernden Durchdringungskurve bei nicht lotrecht verschweissten Rohren
- Ra4: einer der Radien der annähernden Durchdringungskurve bei nicht lotrecht verschweissten Rohren

## Patentansprüche

1. Verfahren zur Herstellung eines geschweissten T-Fittings aus thermoplastischem Kunststoffe, **dadurch gekennzeichnet, dass** die zusammenzufügenden Rohre (2, 3) entlang ihrer annähernden Durchdringungskurve (5) verschweisst werden.

2. Verfahren nach Anspruch 1, **dadurch gekennzeichnet, dass** die annähernde Durchdringungskurve (5) bei unterschiedlichen Rohrdurchmessern (d1, d2) der zusammenzuschweissenden Rohre (2, 3) vorzugsweise der Kontur des Radius (Ra1) der Hauptleitung (2) und bei gleichen Rohrdurchmessenen (d1, d2) der zusammenzuschweissenden Rohre (2, 3) der Durchdringungskurve (4), welche im Scheitelpunkt (9) durch einen Radius (Ra2) verrundeten ist, entspricht.

3. Verfahren nach einem der Ansprüche 1 oder 2, **dadurch gekennzeichnet, dass** der Radius (Ra2) der Verrundung des Scheitelpunkts (9) einem Fünftel des Radius (Ra1) der zu verschweissenden Rohre (2, 3) entspricht.

4. Verfahren nach einem der Ansprüche 1 bis 3, **dadurch gekennzeichnet, dass** an die zu verschweissenden Kontaktflächen der Rohre (2, 3) eine Kontur, die der annährenden Durchdringungskurve (5) der zusammenzufügenden Rohre (2, 3) entspricht, geformt wird.

5. Verfahren nach einem der Ansprüche 1 bis 4, **dadurch gekennzeichnet, dass** das Erwärmen der Kontaktflächen mittels eines Heizspiegels (10) vorgenommen wird.

6. Verfahren nach einem der Ansprüche 1 bis 5, **dadurch gekennzeichnet, dass** das Erwärmen der Kontaktflächen mittels einer flexiblen Heizmatte vorgenommen wird.

7. Verfahren nach einem der Ansprüche 3 bis 6, **dadurch gekennzeichnet, dass** das Erwärmen der Kontaktflächen der miteinander zu verschweissenden Rohre (2, 3) gleichzeitig erfolgt.

8. Verfahren nach einem der Ansprüche 4 oder 6, **dadurch gekennzeichnet, dass** der Heizspiegel (10) die Kontur der annähernden Durchdringungskurve (5) aufweist.

9. Verfahren nach einem der Ansprüche 4 bis 7, **dadurch gekennzeichnet, dass** derselbe Heizspiegel (10) bzw. dieselbe flexible Heizmatte sowohl für die Kontur des abzweigenden Rohres (3) wie auch für die Kontaktflächen der Ausnehmung der Hauptleitung (2) eingesetzt wird.

10. Verfahren nach einem der vorangehenden Ansprüche, **dadurch gekennzeichnet dass**, die Hauptleitung (2) einen Mindestaussendurchmesser (d1) von 400 mm aufweist.

11. Verfahren nach einem der vorangehenden Ansprüche, **dadurch gekennzeichnet, dass** die zu verschweissenden Rohre (2, 3) aus demselben Kunststoff hergestellt sind vorzugsweise aus PE, PP, PB PA oder PVDF.

12. Verfahren nach einem der vorangehenden Ansprüche, **dadurch gekennzeichnet, dass** eine Verstärkung (7, 8) der Wandstärke entlang des Umfangs der Rohre (2, 3) im Bereich der Schweissnaht angebracht wird.

13. Verfahren nach Anspruch 12, **dadurch gekennzeichnet, dass** Rohre (7, 8) zur Verstärkung des T-Fittings (1) vor dem Verschweissen montiert werden.

14. Verfahren nach Anspruch 13, **dadurch gekennzeichnet, dass** an die Rohre (7, 8) zur Verstärkung sowie an die Rohre (2, 3) der Hauptleitung oder Abzweigung (2,3) gleichzeitig im selben Arbeitsgang die Kontur der annähernden Durchdringungskurve gefräst wird.

15. Geschweisster T-Fitting aus thermoplastischem Kunststoffe, **dadurch gekennzeichnet, dass** die zusammenzufügenden Rohre (2, 3) entlang ihrer annähernden Durchdringungskurve (5) geschweisst sind, wobei die annähernde Durchdringungskurve (5) bei unterschiedlichen Rohrdurchmessern (d1, d2) der zusammenzuschweissenden Rohre (2, 3) vorzugsweise der Kontur des Radius (Ra1) der Hauptleitung (2) und bei gleichen Rohrdurchmessenen (d1, d2) der zusammenzuschweissenden Rohre (2, 3) der Durchdringungskurve (4) welche im Scheitelpunkt (9) durch einen Radius (Ra2) verrundeten ist, entspricht.
